# EUROPÄISCHE PATENTSCHRIFT

(11) **EP 2 305 951 B1**
(45) Veröffentlichungstag und Bekanntmachung des Hinweises auf die Patenterteilung: **26.03.2014**
(21) Anmeldenummer: 09166704.8
(22) Anmeldetag: 29.07.2009
(51) Int. Cl.: F16J 15/44, F01C 19/12

(54) **Dichtungsanordnung und Drehkolbenmaschine**
Sealing arrangement and rotating piston engine
Agencement d'étanchéité et machine à piston rotatif

(43) Veröffentlichungstag der Anmeldung: 06.04.2011
(73) Patentinhaber: Aerzener Maschinenfabrik GmbH, 31855 Aerzen (DE)
(72) Erfinder: Reicherdt, Ivan, 31020, Salzhemmendorf (DE); Beckmann, Frank, 31855, Aerzen (DE)
(74) Vertreter: HOFFMANN EITLE

(56) Entgegenhaltungen:
- EP-A- 1 475 518
- BE-A3- 1 011 349
- DE-A1- 19 544 994
- DE-A1-102007 036 714
- FR-A- 490 508
- US-A- 3 010 741
- US-A- 3 432 173

## Beschreibung

### Technisches Gebiet

Die Erfindung betrifft eine Dichtungsanordnung zur Abdichtung von Drehwellen, insbesondere für Drehkolbenmaschinen, nach dem Oberbegriff von Anspruch 1, sowie eine Drehkolbenmaschine.

### Stand der Technik

Drehkolbenmaschinen, insbesondere Schraubenverdichter und Drehkolbengebläse der Bauart Roots, aber auch Drehkolbenexpansionsmaschinen, weisen Drehkolben (Rotoren) auf, die mittels (Wälz-)lagern in einem Gehäuse gelagert sind, um in dem Gehäuse einen Förderraum zu definieren. Insbesondere bei trocken laufenden Drehkolbenmaschinen sind die Wellen der Drehkolben über Steuerräder betrieblich miteinander gekoppelt, wobei die Steuerräder in einem Ölraum angeordnet sind, der in dem Gehäuse benachbart zu dem Förderraum vorgesehen ist.

Um den Förderraum gegenüber dem Ölraum im Bereich der Wellendruchgänge abzudichten, sind unterschiedlichste Dichtungskonstruktionen bekannt. So offenbart beispielsweise die BE 101 13 49 A3 eine Wellenabdichtung, die aus zahlreichen Dichtungs- und Hilfsbauteilen besteht, welche an der Maschine im eingebauten Zustand der Welle einzeln montiert werden. Der Nachteil dieser Montageart ist, dass der Monteur aufgrund der Vielzahl von Teilen und der richtigen Lage der Teile sehr aufmerksam und geschickt sein muss, um sie in kurzer Zeit in den engen und damit schlecht zugänglichen Abdichtungseinbauraum (Raum zwischen Welle und Gehäuse) zu montieren. Dies führt nicht nur zu einem hohen Herstellungsaufwand, sondern bringt auch erhebliche Fehlerquellen mit sich. Darüber hinaus ist im montierten Zustand der Dichtanordnung die radiale Beweglichkeit des jeweiligen Dichtkörpers bzw. der jeweiligen Dichtscheiben nicht mehr überprüfbar und muss somit angenommen werden. Dies ist besonders kritisch, da die radiale Beweglichkeit des Dichtkörpers, der üblicherweise als "schwimmender" Lichtkörper ausgelegt ist, ausschlaggebend für die Funktion der Abdichtung ist.

Um den Montagevorgang der Dichtanordnung zu vereinfachen, ist es bekannt, die Einzelteile der Dichtanordnung zu einer sogenannten Cartridge zusammenzufassen, die als gesamte Einheit auf der Welle bzw. in dem Gehäuse angeordnet werden kann. Eine derartige Dichtungscartridge für Drehkolbenmaschinen ist beispielsweise in der DE 10 2007 036 714 A1 offenbart. Obgleich eine derartige Dichtungscartridge den Montagevorgang an der Maschine vereinfacht, hat sich gezeigt, dass die Herstellung bzw. Vorkonfektionierung der Dichtungscartridge als solche mit einem erheblichen Aufwand verbunden ist. Insbesondere gestaltet sich die Herstellung des Cartridge-Grundkörpers t als aufwändig. Ferner besteht bei bekannten, mehrteiligen Dichtungscartridges die Gefahr, dass sich Gewinde oder Presspassungen an Verbindungsstellen während des Betriebes lösen.

Ferner offenbart die US 3,432,173 A eine Achslagerung für ein Schienenfahrzeug.

### Darstellung der Erfindung

Es ist daher Aufgabe der Erfindung, eine Dichtungsanordnung der eingangs genannten Art bereitzustellen, die sich einfach herstellen lässt und eine hohe Zuverlässigkeit, insbesondere während des Betriebes, aufweist.

Diese Aufgabe wird erfindungsgemäß durch eine Dichtungsanordnung nach Anspruch 1 sowie eine Drehkolbenmaschine nach Anspruch 7 gelöst. Besonders bevorzugte Weiterbildungen der Erfindung sind in den abhängigen Ansprüchen angegeben.

Der Erfindung liegt der Gedanke zugrunde, dass die Dichtungsanordnung durch bloßes Zusammenstecken bzw. Einlegen und ohne die Notwendigkeit eines Verschraubens oder anderweitigen Zusammenfügens von Grundkörperteilen hergestellt bzw. vorkonfektioniert werden kann. Zu diesem Zweck ist erfindungsgemäß vorgesehen, dass bei einer gattungsgemäßen Dichtungsanordnung der Grundkörper mindestens einen Einführschlitz aufweist, der sich radial von einer äußeren Umfangsfläche des Grundkörpers zu einer Dichtungskammer des Grundkörpers erstreckt, wobei der Einführschlitz derart bemessen ist, dass das mindestens eine ringförmige Dichtungselement (und ggf. auch weitere Bauteile) von außen in die entsprechende Dichtungskammer des Grundkörpers eingeführt werden kann.

Auf diese Weise wird es möglich, das mindestens eine Dichtungselement sowie weitere Hilfsbauteile, wie beispielsweise Federelemente oder dergleichen, in einem einfachen und zügigen Arbeitsgang in die jeweilige Dichtungskammer des Grundkörpers einzubringen. Hierfür sind weder besondere Hilfsmittel erforderlich, noch muss der Grundkörper beispielsweise mehrteilig ausgeführt sein, um die jeweiligen Bauteile in das Innere des Grundkörpers einzubringen. Auf diese Weise ergibt sich nicht nur ein drastisch vereinfachter Herstellungsvorgang, sondern es lässt sich auch die Zuverlässigkeit erhöhen, da auf Verbindungsstellen mit Gewinde bzw. weitere kraft- oder formschlüssige Verbindungen verzichtet werden kann.

Gemäß der Erfindung ist ferner vorgesehen, dass die Dichtungsanordnung mindestens ein Federelement aufweist, das gemeinsam mit mindestens einem Dichtungselement in einer Dichtungskammer derart vorgesehen ist, um das Dichtungselement in axialer Richtung vorzuspannen. Auf diese Weise kann sichergestellt werden, dass sich das Dichtungselement einerseits an die jeweilige Ist-Lage der abzudichtenden Welle anpassen kann, jedoch andererseits zuverlässig in dieser Lage unter Ausbildung eines gewünschten Dichtspaltes verbleibt, wenn sich die Ist-Lage der Welle nicht verändert. Hierdurch lässt sich eine gute Abdichtwirkung mit einem geringen Verschleiß und somit einer hohen Lebensdauer der Dichtungsanordnung vereinen. Darüber hinaus verhindert das mindestens eine Federelement ein Herausfallen der einzelnen Teile aus dem Grundkörper, beispielsweise beim Transport.

Im Rahmen dieses Konzepts ist es besonders bevorzugt, dass das Federelement zwischen zwei Dichtungselementen vorgesehen ist. hierdurch lässt sich die Anzahl der erforderlichen Federelemente vermindern und eine verbesserte Abdichtwirkung erzielen.

Obgleich das mindestens eine Federelement prinzipiell auf beliebige Weise in das Innere des Grundkörpers eingebracht werden kann, ist gemäß einer Weiterbildung der Erfindung vorgesehen, dass das Federelement derart ausgestaltet ist, dass es durch den Einführschlitz von außen in die entsprechende Dichtungskammer einführbar ist. Hierdurch lassen sich ähnliche Vorteile wie oben erläutert, erzielen, indem sich eine ebenso einfache wie zuverlässige Herstellung und Vorkonfektionierung der erfindungsgemäßen Dichtungsanordnung ergibt. Gemäß einer Weiterbildung der Erfindung ist ferner vorgesehen, dass der Grundkörper eine Mehrzahl von Dichtungskammern aufweist, in denen jeweils mindestens ein Dichtungselement und bevorzugt mindestens ein Federelement vorgesehen ist. Auf diese Weise lässt sich nicht nur die Abdichtungswirkung der erfindungsgemäßen Dichtungsanordnung verbessern, sondern es kann auch eine höhere Dauerhaftigkeit erzielt werden, beispielsweise indem der Dichtungsverschleiß vermindert und die Gefahr eines Nachlassens der Abdichtungswirkung (beispielsweise durch hohe Temperaturen) minimiert wird.

Im Hinblick auf ein besonders vorteilhaftes Zusammenspiel der erfindungsgemäßen Dichtungsanordnung mit einem angrenzenden Ölraum ist darüber hinaus gemäß einer Weiterbildung der Erfindung vorgesehen, dass der Grundkörper zumindest einen ersten und einen zweiten äußeren Umfangsabschnitt aufweist, wobei der zweite äußere Umfangsabschnitt einen geringeren Durchmesser aufweist als der erste äußere Umfangsabschnitt, und wobei der zweite äußere Umfangsabschnitt sich von einem Einführschlitz zu einem freien Ende des Grundkörpers erstreckt. Auf diese Weise kann der Einführschlitz zusammen mit dem zweiten äußeren Umfangsabschnitt (der einen geringeren Durchmesser aufweist) als Ölrücklauf vom Inneren der Dichtungsanordnung hin zu einem angrenzenden Ölraum dienen. Hierdurch wird mit minimalem Aufwand ein zuverlässiger Dauerbetrieb der erfindungsgemäßen Dichtungsanordnung sichergestellt.

Obgleich der Grundkörper der erfindungsgemäßen Dichtungsanordnung prinzipiell auf vielfältige Art und Weise hergestellt und beispielsweise auch mehrteilig ausgeführt werden kann, ist gemäß einer Weiterbildung der Erfindung vorgesehen, dass der Grundkörper einstückig ausgeführt ist. Hierdurch vereinfacht sich die Vormontage der Dichtungsanordnung - in Kombination mit der erfindungsgemäßen Ausgestaltung des Grundkörpers mit mindestens einem radialen Einführschlitz - dramatisch, und es werden vielfältige Fehlerquellen eliminiert. Auch wird die Dauerhaftigkeit und Steifigkeit des Grundkörpers durch die einstückige Ausgestaltung verbessert.

Die Herstellung eines einstückigen Grundkörpers kann im Rahmen der Erfindung durch vielfältige bekannte Verfahren erfolgen, beispielsweise auch durch vollständig spanende Bearbeitung. Die Erfindung stellt jedoch gemäß Anspruch 9 auch ein Verfahren zum Herstellen einer Dichtungsanordnung bereit, bei welchem zunächst ein Rohling für den Grundkörper als Gussteil hergestellt wird, wobei der Rohling bereits mindestens eine radiale Durchgangsöffnung aufweist. Auf diese Weise wird es möglich, einen Grundkörper für die erfindungsgemäße Dichtungsanordnung mit minimalem Aufwand bereitzustellen, an dem nur noch vergleichsweise geringe bzw. einfache und zügige spanende Bearbeitungen erforderlich sind. So kann der Rohling im allgemeinen durch eine einfache Drehbearbeitung fertiggestellt werden, ohne dass beispielsweise eine Fräsbearbeitung erforderlich ist, da alle Öffnungen des Grundkörpers mit ausreichender Genauigkeit gegossen werden können.

Ferner betrifft die vorliegende Erfindung eine Drehkolbenmaschine, insbesondere einen trocken laufenden Drehkolbenverdichter nach Anspruch 7. Dieser zeichnet sich dadurch aus, dass mindestens eine erfindungsgemäße Dichtungsanordnung auf einer Welle der Drehkolbenmaschine dichtend in Bezug auf ein Gehäuse der Drehkolbenmaschine angeordnet ist. Die Vorteile der erfindungsgemäßen Dichtungsanordnung entfalten sich in einer Drehkolbenmaschine besonders ausgeprägt, da in einer Drehkolbenmaschine einerseits hohe dynamische Beanspruchungen im Bereich der Wellen auftreten, und andererseits vielfältige Förder- und Schmiermedien in benachbarten Kammern bzw. Räumen vorliegen, die zuverlässig voneinander zu trennen sind. Hinzu kommt, dass bei Drehkolbenmaschinen immer höhere Drehzahlen und Pulsationen des Fördermediums auftreten, sodass die Dichtungsanordnungen eine entsprechend hohe Belastbarkeit und Dauerhaftigkeit aufweisen müssen. Diese Anforderungen werden durch die erfindungsgemäße Dichtungsanordnung in hervorragender Weise erfüllt.

Vor diesem Hintergrund ist es besonders bevorzugt, dass mindestens eine Dichtungsanordnung abdichtend im Gehäuse zwischen dem Förderraum und einem Ölraum angeordnet ist. Alternativ oder zusätzlich ist gemäß einer Weiterbildung der Erfindung vorgesehen, dass mindestens eine Dichtungsanordnung abdichtend im Gehäuse zwischen einem Ölraum und einer Außenseite des Gehäuses angeordnet ist.

### Kurze Beschreibung der Zeichnungen

Fig. 1 zeigt schematisch eine Schnittansicht eines Drehkolbenverdichters mit einer Dichtungsanordnung gemäß einer ersten Ausführungsform der vorliegenden Erfindung;
Fig. 2a zeigt schematisch eine Seitenansicht und eine Schnittansicht eines Grundkörpers für die in Fig. 1 gezeigte Dichtungsanordnung;
Fig. 2b zeigt schematisch eine Seitenansicht und eine Schnittansicht eines weiteren Grundkörpers für die in Fig. 1 gezeigte Dichtungsanordnung;
Fig. 3 zeigt schematisch eine Schnittansicht eines Drehkolbenverdichters mit einer Dichtungsanordnung gemäß einer zweiten Ausführungsform der vorliegenden Erfindung;
Fig. 4 zeigt schematisch eine Schnittansicht eines Drehkolbenverdichters mit einer Dichtungsanordnung gemäß einer dritten Ausführungsform der vorliegenden Erfindung;
Fig. 5 zeigt schematisch eine Schnittansicht eines Drehkoibenverdichters mit einer Dichtungsanordnung gemäß einer vierten Ausführungsform der vorliegenden Erfindung;

### Ausführliche Beschreibung bevorzugter Ausführungsformen

Bevorzugte Ausführungsformen der Erfindung werden nachfolgend ausführlich unter Bezugnahme auf die begleitenden Zeichnungen beschrieben.

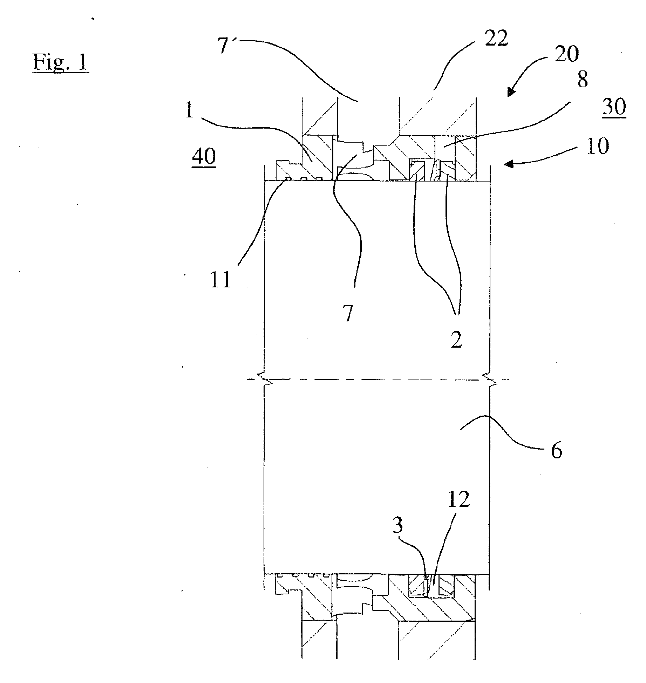

Eine Dichtungsanordnung 10 gemäß einer ersten bevorzugten Ausführungsform der vorliegenden Erfindung ist in Fig. 1 schematisch in einer Schnittansicht dargestellt. Die Dichtungsanordnung 10 dient zur Abdichtung einer Drehwelle 6 im Bereich eines Durchgangs 6 durch ein Gehäuse 22. Eine derartige Einbausituation kommt beispielsweise bei Drehkolbenmaschinen häufig vor, wobei das Einsatzgebiet der erfindungsgemäßen Dichtungsanordnung 10 nicht hierauf beschränkt ist.

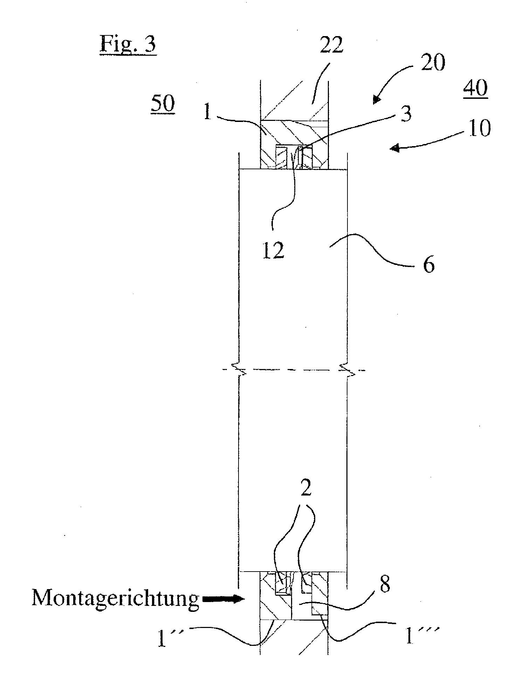

In der vorliegenden Ausführungsform ist die Dichtungsanordnung 10 abdichtend im Gehäuse 22 zwischen einem Förderraum 30 und einem Ölraum 40 angeordnet. Als Förderraum 30 wird dabei derjenige Raum bezeichnet, in welchem hier nicht näher gezeigte Drehkolben miteinander kämmen, um Medien zu fördern und gegebenenfalls zu verdichten. In dem Ölraum 40 sind nicht gezeigte Zahnräder angeordnet, die auf den Drehkolbenwellen 6 vorgesehen sind und miteinander kämmen, um einen Synchronbetrieb der Drehkolben zu ermöglichen. Es ist jedoch zu beachten, dass die erfindungsgemäße Dichtungsanordnung 10 auch an anderen Gehäusedurchgängen angeordnet sein kann, beispielsweise zwischen dem Ölraum 40 und einer Außenseite des Gehäuses, wie dies beispielhaft in Fig. 3 gezeigt ist.

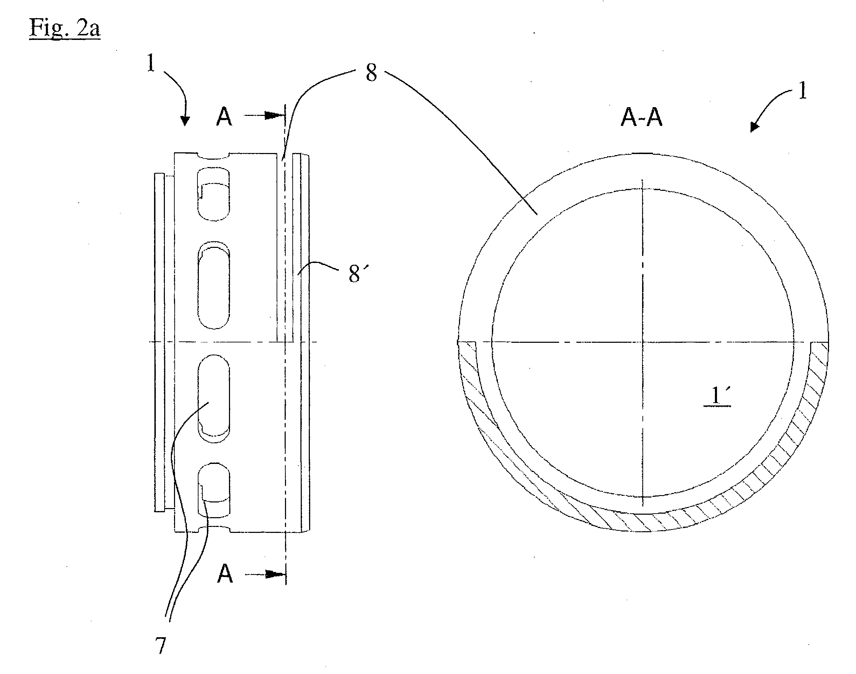

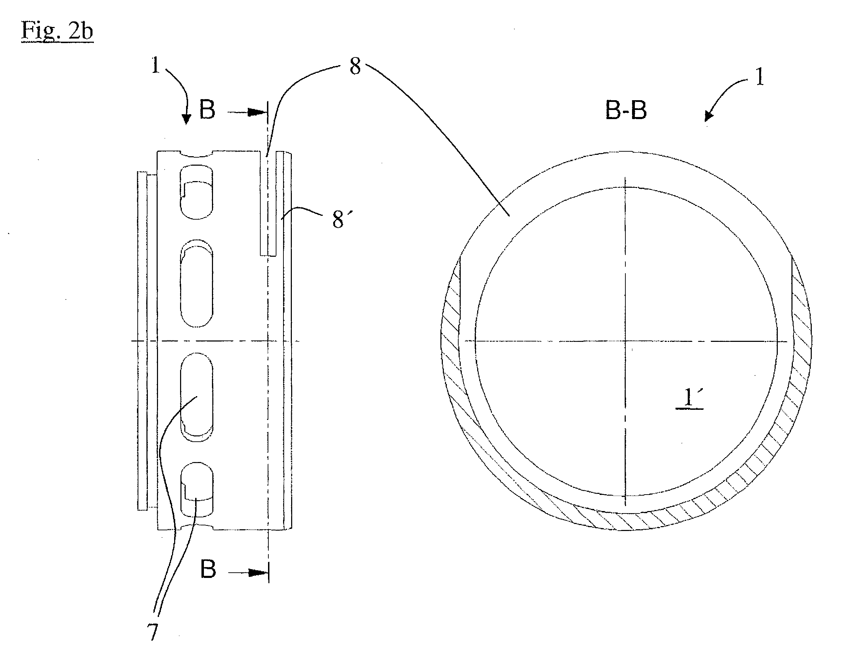

Die Dichtungsanordnung 10 umfasst zunächst einen buchsenartigen Grundkörper 1, wobei beispielhafte Ausgestaltungen des buchsenartigen Grundkörpers 1 in den Figuren 2a bzw. 2b schematisch dargestellt sind. Der buchsenartige Grundkörper 1 definiert eine axiale Durchgangsöffnung 1' zur Aufnahme einer Drehwelle 6 und, in der vorliegenden Ausführungsform, eine um die Durchgangsöffnung 1' herum angeordnete Dichtungskammer 12.

In der Dichtungskammer 12 sind in der vorliegenden Ausführungsform zwei ringförmige Dichtungselemente 2 angeordnet, und zwar derart, um einen Dichtspalt zu der in der Durchgangsöffnung 1' des Grundkörpers eingefügten Drehwelle 6 zu definieren, was untenstehend noch näher erläutert wird.

Die nähere Ausgestaltung des Grundkörpers 1 ist in den Figuren 2a bzw. 2b noch besser zu erkennen, die jeweils eine Seitenansicht bzw. Schnittansicht eines Grundkörpers 1 für eine erfindungsgemäße Dichtungsanordnung 10 zeigen. Danach weist der Grundkörper 1 in der vorliegenden Ausführungsform einen Einführschlitz 8 auf, der sich radial von einer äußeren Umfangsfläche des Grundkörpers 1 zu der Dichtungskammer 12 des Grundkörpers 1 erstreckt (vgl. Fig. 1).

Dabei ist der Einführschlitz 8 derart bemessen, dass das ringförmige Dichtungselement 2 von außen in die entsprechende Dichtungskammer 12 des Grundkörpers eingeführt werden kann. Zu diesem Zweck kann der Einführschlitz sich beispielsweise, wie in Fig. 2a gezeigt, über die Hälfte der äußeren Umfangsfläche des Grundkörpers 1 erstrecken. Vorteilhaft ist es jedoch ebenso möglich, den Einführschlitz mit geringeren Abmessungen auszuführen und gleichzeitig sicherzustellen, dass das Dichtungselement 2 weiterhin von außen in die Dichtungskammer 12 des Grundkörpers 1 eingeführt werden kann. Eine derartige Ausgestaltung des Einführschlitzes 8 ist in Fig. 2b schematisch dargestellt. Diese Ausgestaltung besitzt den Vorteil, dass die Mantelfläche des buchsenartigen Grundkörpers weniger stark geschwächt wird, sodass die Stabilität des an den Einführschlitz 8 angrenzenden Steges 8' verbessert wird. Hierdurch wird die Beschädigungsgefahr des Grundkörpers 1, beispielsweise bei dessen Einbau, vermindert, und die Dauerhaftigkeit des Grundkörpers wird erhöht. Zwischen den Dichtungselementen 2 ist in der vorliegenden Ausführungsform ein Federelement 3 angeordnet, das ebenfalls ringförmig bzw. C-ringförmig ausgebildet sein kann und derart vorgesehen ist, um die Dichtungselemente 2 in axialer Richtung vorzuspannen. Dabei ist das Federelement 3 derart ausgestaltet, dass es ebenfalls durch den Einführschlitz 8 von außen in die entsprechende Dichtungskammer 12 eingeführt werden kann. Durch das Vorsehen des Federelements 3 wird ermöglicht, dass die Dichtelemente 2 innerhalb der Dichtkammer 12 beweglich bleiben und sich an die jeweilige Ist-Position der Welle anpassen können, um einen geeigneten Dichtspalt auszubilden. Sobald die Dichtelemente 2 in eine geeignete Dichtposition "geschwommen" sind, sorgt das Federelement 3 dafür, dass diese Position der Dichtelemente 2 bis auf weiteres beibehalten wird.

Ferner umfasst der Grundkörper 1 in der vorliegenden Ausführungsform eine Mehrzahl radialer Durchgangsöffnungen 7, die dazu vorgesehen sind, das Innere des Grundkörpers 1 mit einem im Gehäuse 22 gebildeten, neutralen Raum 7' zu verbinden. Darüber hinaus besitzt der Grundkörper 1 eine üblicherweise dem Ölraum zugewandte, labyrinthartige Abdichtung in Form einer Vertiefung 11, die in der inneren Umfangsfläche des Grundkörpers 1 gebildet ist. Dabei kann die Vertiefung 11 beispielsweise gewindeartig oder auch in Form mehrerer getrennter Umfangsrillen ausgebildet sein.
Der in den Figuren 2a und 2b gezeigte Grundkörper 1 ist in der vorliegenden Ausführungsform als einstückiges Gussteil hergestellt. Zu diesem Zweck wird erfindungsgemäß zunächst ein Rohling als Gussteil hergestellt, und dieser Rohling wird anschließend spanend nachbearbeitet. Dabei hat es sich als besonders vorteilhaft erwiesen, dass es in vielen Fällen ausreichend ist, den Gussteilrohling lediglich einer Drehbearbeitung zu unterwerfen und alle anderen Durchgangsöffnungen, wie beispielsweise die Durchgangsöffnungen 7, bereits in dem Gussteilrohling vorzusehen. Auf diese Weise kann in vielen Fällen auf aufwändige Fräsbearbeitungen oder dergleichen verzichtet werden, sodass sich eine besonders einfache und zügige Herstellung des erfindungsgemäßen Grundkörpers ergibt.

Nach der Fertigstellung des Grundkörpers 1 können die Dichtelemente 2 und das Federelement 3 in die Dichtungskammer 12 eingeführt werden. Zu diesem Zweck wird zunächst ein erstes Dichtelement 2 radial durch den Einführschlitz 8 in die Dichtungskammer 12 eingeführt, anschließend folgt das Federelement 3, und schließlich wird das zweite Dichtungselement 2 durch den Einführschlitz 8 in die Dichtungskammer 12 eingeführt. Beim Einführen des zweiten Dichtungseiements 2 wird das Federelement 3 derart komprimiert, dass sich eine gewünschte Federkraft einstellt.

Anschließend wird der Grundkörper 1 in dem Wellendurchgang des Gehäuses 22 montiert, wobei beispielsweise ein zusätzliches flüssiges Dichtungsmittel zwischen dem Grundkörper 1 und dem Gehäuse 22 vorgesehen werden kann. Nunmehr kann die Welle 6 in die innere Durchgangsöffnung 1' des Grundkörpers 1 eingeführt werden.

Eine Dichtungsanordnung 10 gemäß einer zweiten bevorzugten Ausführungsform der vorliegenden Erfindung ist in Fig. 3 schematisch in einer Schnittansicht dargestellt. Die Dichtungsanordnung zeichnet sich gegenüber der in Fig. 1 gezeigten Dichtungsanordnung zunächst dadurch aus, dass sie wesentlich kompakter ausgeführt ist und sich auf die wesentlichen Grundelemente beschränkt, insbesondere einen Grundkörper 1 mit einem radialen Einführschlitz 8, um die Dichtungselemente 2 sowie das Federelement 3 in das Innere des Grundkörpers 1 einzuführen.

Darüber hinaus weist der Grundkörper 1 in der vorliegenden Ausführungsform eine abgestufte äußere Umfangsfläche auf, und zwar mit einem ersten äußeren Umfangsabschnitt 1" und einem zweiten äußeren Umfangsabschnitt 1"', wobei der zweite äußere Umfangsabschnitt 1"' einen geringeren Durchmesser aufweist als der erste äußere Umfangsabschnitt 1". Dabei erstreckt sich der zweite äußere Umfangsabschnitt 1"' von dem Einführschlitz 8 zu einem freien Ende des Grundkörpers 1 (rechts in Fig. 3). Auf diese Weise kann der Einführschlitz 8 eine Doppelfunktion erfüllen, indem er nicht nur zum Einführen der Dichtungselemente 2 bzw. der Feder 3 dient, sondern auch als Ölrücklauf dient.

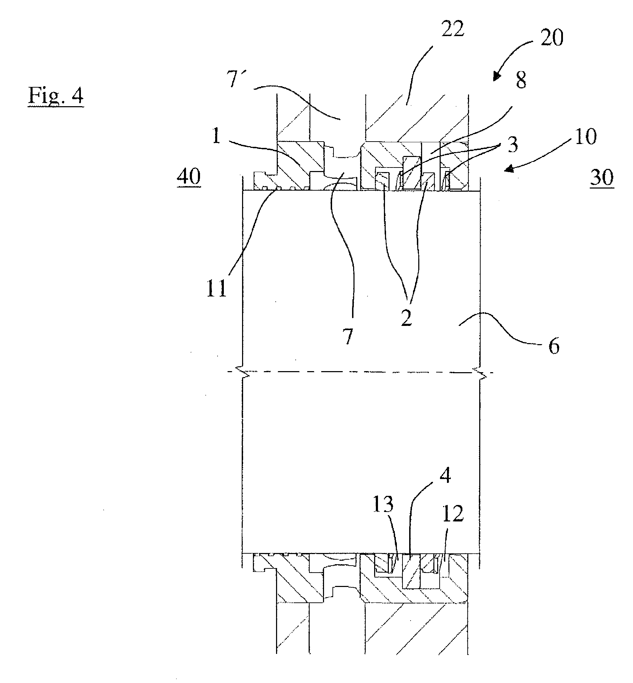

Eine dritte bevorzugte Ausführungsform der erfindungsgemäßen Dichtungsanordnung 10 ist in Fig. 4 schematisch in einer Schnittansicht dargestellt. Diese Ausführungsform zeichnet sich primär dadurch aus, dass der Grundkörper 1 zwei Dichtungskammern 12, 13 aufweist, in denen jeweils ein Dichtungselement 2 und ein Federelement 3 vorgesehen ist. Zur Abtrennung der Dichtungskammern 12, 13 voneinander ist im Inneren des Grundkörpers 1 ein Kammerring 4 vorgesehen.

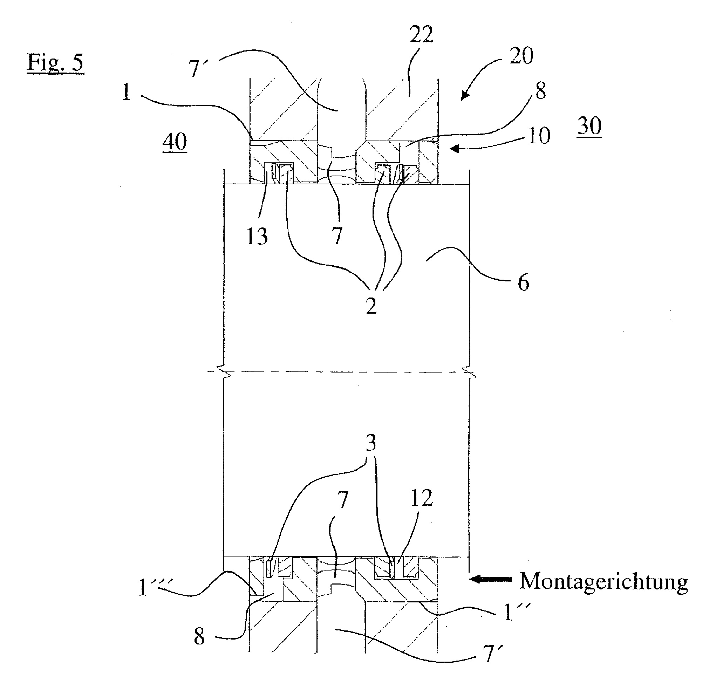

Eine vierte bevorzugte Ausführungsform der erfindungsgemäßen Dichtungsanordnung 10 ist in Fig. 5 in einer schematischen Schnittansicht dargestellt. Auch bei dieser Dichtungsanordnung 10 weist der Grundkörper 1 zwei Dichtungskammern 12 bzw. 13 auf, wobei die Dichtungskammern 12, 13 im vorliegenden Falle auf gegenüberliegenden Seiten des neutralen Raums 7' und der entsprechenden Durchgangsöffnungen 7 angeordnet sind. Vor diesem Hintergrund ist jeder Dichtungskammern 12 bzw. 13 ein eigener Einführschlitz 8 zum Einführen des entsprechenden Dichtungselements 2 bzw. der entsprechenden Feder 3 zugeordnet. Auch bei der in Fig. 5 gezeigten Ausführungsform kann der seitens des Ölraums angeordnete Einführschlitz 8 vorteilhaft als Ölrücklauf dienen, da der zweite äußere Umfangsabschnitt 1"' einen geringeren Durchmesser aufweist als der erste äußere Umfangsabschnitt 1". Darüber hinaus ermöglicht diese Ausgestaltung der äußeren Umfangsabschnitte, dass die Dichtungsanordnung in der in Fig. 5 angegebenen Montagerichtung eingebaut werden kann, ohne dass die Gefahr einer Beschädigung des vorlaufenden Steges besteht.

Darüber hinaus ist zu beachten, dass zusätzlich zu den vorstehend ausdrücklich beschriebenen Ausführungsformen vielfältige Ausgestaltungen und Abwandlungen der erfindungsgemäßen Dichtungsanordnung und des erfindungsgemäßen Grundkörpers möglich sind. Insbesondere ist sowohl die Anzahl als auch die Anordnung der Dichtungskammern, Dichtungselemente, Federelemente etc. vielfältig variierbar.

## Patentansprüche

1. Dichtungsanordnung (10) zur Abdichtung von Drehwellen (6) im Bereich eines Welle-Gehäusedurchganges bei Drehkolbenmaschinen (20), mit
einem buchsenartigen Grundkörper (1), der eine axiale Durchgangsöffnung (1') zur Aufnahme einer Drehwelle (6) und mindestens eine um die Durchgangsöffnung (1') herum angeordnete Dichtungskammer (12, 13) definiert,
mindestens einem ringförmigen Dichtungselement (2), das in einer Dichtungskammer (12, 13) des Grundkörpers (1) vorgesehen ist,
wobei der Grundkörper (1) mindestens einen Einführschlitz (8) aufweist, der sich radial von einer äußeren Umfangsfläche des Grundkörpers (1) zu einer Dichtungskammer (12, 13) des Grundkörpers (1) erstreckt, und
der Einführschlitz (8) derart bemessen ist, dass das ringförmige Dichtungselement (2) von außen in die entsprechende Dichtungskammer (12, 13) des Grundkörpers (1) eingeführt werden kann,
**dadurch gekennzeichnet, dass**
das mindestens eine ringförmige Dichtungselement derart in der Dichtungskammer des Grundkörpers vorgesehen ist, um einen Dichtspalt zu einer in die Durchgangsöffnung (1') des Grundkörpers eingefügte Drehwelle (6) zu definieren,
die Dichtungsanordnung mindestens ein Federelement (3) aufweist, das gemeinsam mit mindestens einem Dichtungselement (2) in einer Dichtungskammer (12, 13) derart vorgesehen ist, um das Dichtungselement (2) in axialer Richtung vorzuspannen.

2. Dichtungsanordnung nach Anspruch 1, **dadurch gekennzeichnet, dass** das Federelement (3) zwischen zwei Dichtungselementen (2) vorgesehen ist.

3. Dichtungsanordnung nach Anspruch 1 oder 2, **dadurch gekennzeichnet, dass** das Federelement (3) derart ausgestaltet ist, dass es durch den Einführschlitz (8) von außen in die entsprechende Dichtungskammer (12, 13) einführbar ist.

4. Dichtungsanordnung nach einem der vorhergehenden Ansprüche, **dadurch gekennzeichnet, dass** der Grundkörper (1) eine Mehrzahl von Dichtungskammern (12, 13) aufweist, in denen jeweils mindestens ein Dichtungselement (2) und bevorzugt mindestens ein Federelement (3) vorgesehen ist.

5. Dichtungsanordnung nach einem der vorhergehenden Ansprüche, **dadurch gekennzeichnet, dass** der Grundkörper zumindest einen ersten (1") und einen zweiten (1'") äußeren Umfangsabschnitt aufweist, wobei der zweite äußere Umfangsabschnitt (1'") einen geringeren Durchmesser aufweist als der erste äußere Umfangsabschnitt (1'"), und wobei der zweite äußere Umfangsabschnitt (1'") sich von einem Einführschlitz (8) zu einem freien Ende des Grundkörpers (1) erstreckt.

6. Dichtungsanordnung nach einem der vorhergehenden Ansprüche, **dadurch gekennzeichnet, dass** der Grundkörper (1) einstückig ist.

7. Drehkolbenmaschine (20), insbesondere trocken laufender Drehkolbenverdichter, umfassend
mindestens zwei in einem Gehäuse (22) über Wellen (6) und Wälzlageranordnungen gelagerte Drehkolben, die miteinander gegenläufig kämmen, um einen Förderraum (30) zu definieren, und
mindestens einer Dichtungsanordnung (10) nach einem der Ansprüche 1 bis 6, die auf einer Welle (6) dichtend angeordnet ist.

8. Drehkolbenmaschine nach Anspruch 7, **dadurch gekennzeichnet, dass** mindestens eine Dichtungsanordnung (10) abdichtend im Gehäuse (22) zwischen dem Förderraum (30) und einem Ölraum (40) angeordnet ist.

9. Drehkolbenmaschine nach Anspruch 7 oder 8, **dadurch gekennzeichnet, dass** mindestens eine Dichtungsanordnung (10) abdichtend im Gehäuse (22) zwischen einem Ölraum (40) und einer Außenseite (50) des Gehäuses (22) angeordnet ist.

## Claims

1. Sealing assembly (10) for sealing rotating shafts (6) in the region of an opening in a housing for passage of the shaft in rotating-piston engines (20), having
a bush-like base body (1) which defines an axial through-opening (1') for receiving a rotating shaft (6) and at least one sealing chamber (12, 13) arranged around the through-opening (1'),
at least one annular sealing element (2) which is provided in a sealing chamber (12, 13) of the base body (1),
wherein the base body (1) has at least one insertion slot (8) which extends radially from an outer peripheral surface of the base body (1) to a sealing chamber (12, 13) of the base body (1), and
the dimensions of the insertion slot (8) are such that the annular sealing element (2) can be introduced from the outside into the corresponding sealing chamber (12, 13) of the base body (1),
**characterised in that**
the at least one annular sealing element is provided in the sealing chamber of the base body in such a way as to define a sealing gap from a rotating shaft (6) inserted in the through-opening (1') in the base body,
the sealing assembly has at least one spring element (3) which together with at least one sealing element (2) is provided in a sealing chamber (12, 13) in such a way as to bias the sealing element (2) in the axial direction.

2. Sealing assembly according to claim 1, **characterised in that** the spring element (3) is provided between two sealing elements (2).

3. Sealing assembly according to claim 1 or 2, **characterised in that** the spring element (3) is designed in such a way that it can be introduced through the insertion slot (8) from the outside into the corresponding sealing chamber (12, 13).

4. Sealing assembly according to any of the preceding claims, **characterised in that** the base body (1) has a plurality of sealing chambers (12, 13) in each of which are provided at least one sealing element (2) and preferably at least one spring element (3).

5. Sealing assembly according to any of the preceding claims, **characterised in that** the base body has at least one first (1") and one second (1'") outer peripheral section, wherein the second outer peripheral section (1'") has a smaller diameter than the first outer peripheral section (1'"), and wherein the second outer peripheral section (1'") extends from an insertion slot (8) to a free end of the base body (1).

6. Sealing assembly according to any of the preceding claims, **characterised in that** the base body (1) is in one piece.

7. Rotating-piston engine (20), in particular dry-running rotating-piston compressor, comprising
at least two rotating pistons which are mounted in a housing (22) via shafts (6) and rolling bearing assemblies and which mesh with each other, rotating in opposite directions, to define a delivery chamber (30), and
at least one sealing assembly (10) according to any of claims 1 to 6, which is arranged in sealing relationship on a shaft (6).

8. Rotating-piston engine according to claim 7, **characterised in that** at least one sealing assembly (10) is arranged in sealing relationship in the housing (22) between the delivery chamber (30) and an oil chamber (40).

9. Rotating-piston engine according to claim 7 or 8, **characterised in that** at least one sealing assembly (10) is arranged in sealing relationship in the housing (22) between an oil chamber (40) and an outer side (50) of the housing (22).

## Revendications

1. Dispositif d'étanchéité (10) pour l'étanchéité d'arbres rotatifs (6) au niveau d'un passage de carter d'arbre sur des machines à pistons rotatifs (20), avec
un corps de base (1) en forme de douille, définissant une ouverture de passage (1') axiale pour la réception d'un arbre rotatif (6) et au moins un compartiment d'étanchéité (12, 13) disposé tout autour de l'ouverture de passage (1'),
au moins un élément d'étanchéité annulaire (2), prévu dans un compartiment d'étanchéité (12, 13) du corps de base (1),
le corps de base (1) présentant au moins une fente d'insertion (8) qui s'étend radialement d'une surface périphérique extérieure du corps de base (1) vers un compartiment d'étanchéité (12, 13) du corps de base (1), et
ladite fente d'insertion (8) étant dimensionnée de manière à permettre à l'élément d'étanchéité annulaire (2) d'être introduit de l'extérieur dans le compartiment d'étanchéité (12, 13) correspondant du corps de base (1),
**caractérisé en ce que**
le ou les éléments d'étanchéité annulaires sont prévus dans le compartiment d'étanchéité du corps de base de manière à définir un interstice d'étanchéité dans un arbre rotatif (6) introduit dans l'ouverture de passage (1') du corps de base,
ledit dispositif d'étanchéité comporte au moins un élément à ressort (3) prévu dans un compartiment d'étanchéité (12, 13) avec au moins un élément d'étanchéité (2) de manière à pré-contraindre l'élément d'étanchéité (2) en direction axiale.

2. Dispositif d'étanchéité selon la revendication 1, **caractérisé en ce que** l'élément à ressort (3) est prévu entre deux éléments d'étanchéité (2).

3. Dispositif d'étanchéité selon la revendication 1 ou 2, **caractérisé en ce que** l'élément à ressort (3) est réalisé de manière à pouvoir être inséré de l'extérieur dans le compartiment d'étanchéité (12, 13) correspondant par la fente d'insertion (8).

4. Dispositif d'étanchéité selon l'une des revendications précédentes, **caractérisé en ce que** le corps de base (1) comprend une pluralité de compartiments d'étanchéité (12, 13), dans chacun desquels au moins un élément d'étanchéité (2) et préférentiellement au moins un élément à ressort (3) sont prévus.

5. Dispositif d'étanchéité selon l'une des revendications précédentes, **caractérisé en ce que** le corps de base comporte au moins un premier (1'") et un deuxième (1'") tronçons périphériques extérieurs, le deuxième tronçon périphérique extérieur (1'") présentant un diamètre inférieur à celui du premier tronçon périphérique extérieur (11"), et le deuxième tronçon périphérique extérieur (1'") s'étendant d'une fente d'insertion (8) vers une extrémité libre du corps de base (1).

6. Dispositif d'étanchéité selon l'une des revendications précédentes, **caractérisé en ce que** le corps de base (1) est constitué d'une seule pièce.

7. Machine à pistons rotatifs (20), en particulier compresseur à piston rotatif fonctionnant à sec, comprenant
au moins deux pistons rotatifs montés sur des arbres (6) et des dispositifs à roulements dans un carter (22), lesquels sont en prise en tournant en sens inverses l'un par rapport à l'autre pour définir un compartiment de refoulement (30), et
au moins un dispositif d'étanchéité (10) selon l'une des revendications 1 à 6, monté sur un arbre (6) de manière à assurer une étanchéité.

8. Machine à pistons rotatifs selon la revendication 7, **caractérisé en ce qu'**au moins un dispositif d'étanchéité (10) est disposé de manière à assurer une étanchéité dans le carter (22) entre le compartiment de refoulement (30) et un compartiment à huile (40).

9. Machine à pistons rotatifs selon la revendication 7 ou 8, **caractérisé en ce qu'**au moins un dispositif d'étanchéité (10) est disposé de manière à assurer une étanchéité dans le carter (22) entre un compartiment à huile (40) et une face extérieure (50) du carter (22).
